# EUROPÄISCHE PATENTANMELDUNG

(11) **EP 1 655 093 A1**
(43) Veröffentlichungstag der Anmeldung: **10.05.2006**
(21) Anmeldenummer: 04026622.3
(22) Anmeldetag: 09.11.2004
(51) Int. Cl.: B23H 9/00, C23F 1/02, F02M 61/16

(54) **Verfahren zur Nachbearbeitung eines Durchgangslochs**

(71) Anmelder: SIEMENS AKTIENGESELLSCHAFT, 80333 München (DE)
(72) Erfinder: Beyer, Roman, 12167 Berlin (DE); Jabado, Rene, 14199 Berlin (DE); Kaden, Uwe, Dr., 14513 Teltow (DE); Krüger, Ursus, Dr., 14089 Berlin (DE); Körtvelyessy, Daniel, 13467 Berlin (DE); Reiche, Ralph, 13465 Berlin (DE); Rindler, Michael, 15566 Schöneiche (DE); Steinbach, Jan, Dr., 13353 Berlin (DE)

(57) **Zusammenfassung**

Der Zustand der Nachbearbeitung eines Durchgangslochs von Bauteilen mittels eines Mittels wurde bisher immer durch Unterbrechung des Nachbearbeitungsprozesses ermittelt oder empirisch festgelegt. Anhand des dann ermittelten Zustands der Nachbearbeitung wurde über die Weiterverarbeitung des Bauteils entschieden.

Das erfindungsgemäße Verfahren beinhaltet, dass der Zustand kontinuierlich oder diskontinuierlich während der Nachbearbeitung des Durchgangslochs (7) durch Messung der Durchströmmenge des Mittels (11) pro Zeit des Durchgangslochs (7) bei Drücken kleiner 100bar ermittelt wird.

## Beschreibung

Die Erfindung betrifft ein Verfahren zur Nachbearbeitung eines Durchgangslochs eines Bauteils gemäß Anspruch 1.

Durchgangslöcher von Bauteilen müssen oft nachbearbeitet werden, weil sie nicht die gewünschte Geometrie aufweisen. Dies kann bei einem neu hergestellten Bauteil der Fall sein, wenn beispielsweise der Durchmesser zu groß oder zu klein ausgefallen ist.
Wenn der Durchmesser zu groß ist, muss Material in dem Durchgangsloch aufgetragen werden, wohingegen bei einem zu kleinen Durchmesser Material abgetragen werden muss.

Ebenso kann es sein, dass das Durchgangsloch aufgrund des Betriebs des Bauteils oxidiert oder korrodiert ist und die Oxidations- oder Korrosionsprodukte (beispielsweise als vollständige oder teilweise Beschichtung vorhanden) entfernt werden müssen, wodurch sich der Querschnitt oder der Durchmesser des Durchgangslochs vergrößert.

Die DE 198 32 767 A1 beschreibt ein Verfahren zum Reinigen eines Bauteils, wobei die Reinigungsflüssigkeit durch die Durchgangslöcher strömt.

Die US-PS 5,865,977 offenbart eine Kalibrierungsmethode eines Verfahrens zur Bestimmung der Durchflussmenge mittels Druckmessung bei Drücken von 100bar.

Die DE 34 03 402 offenbart die elektrochemische Bearbeitung eines Werkstücks an der äußeren Oberfläche.

Selbstverständlich darf auch bei der Nachbearbeitung der Durchmesser oder der Querschnitt nicht zu groß oder zu klein werden.

In der Regel wird die Bearbeitungszeit empirisch festgelegt oder dadurch überprüft, dass der Nachbearbeitungsprozess unterbrochen wird und das Durchgangsloch vermessen wird. Ist die gewünschte Form oder Größe erreicht, so ist das Bauteil fertig und kann benutzt werden, anderenfalls wird der Nachbearbeitungsprozess erneut gestartet.
Wenn der Nachbearbeitungsprozess zu weit fortgeschritten war, muss das Bauteil als unbrauchbar aussortiert werden.

Aufgabe der vorliegenden Erfindung ist es deshalb, die Nachbearbeitung von Durchgangslöchern zu vereinfachen und im Ergebnis sicher zu machen.

Die Aufgabe wird gelöst durch ein Verfahren gemäß Anspruch 1.

In den Unteransprüchen sind weitere vorteilhafte Verfahrensschritte aufgelistet.
Diese Verfahrensschritte können beliebig miteinander in vorteilhafter Art und Weise kombiniert werden.

### Es zeigen

- Figur 1,: ein Durchgangsloch,
- Figur 2, 3, 4: beispielhafte Vorrichtungen, um das erfindungsgemäße Verfahren durchzuführen,
- Figur 5: schematischen Verlauf der zeitlichen Änderung der Durchflussmenge
- Figur 6: eine Turbinenschaufel,
- Figur 7: eine Brennkammer und
- Figur 8: eine Turbine.

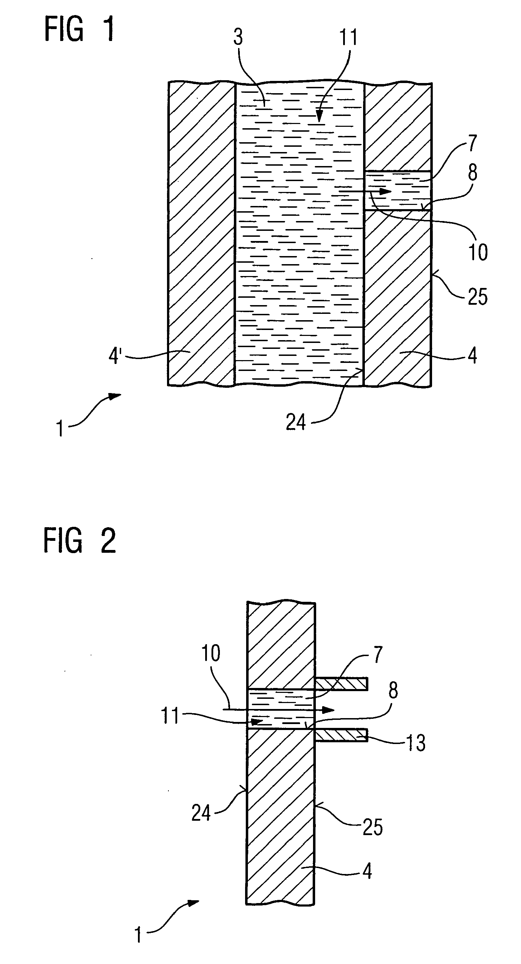

Figur 1 zeigt ein Bauteil 1, das beispielsweise einen Hohlraum 3 und zumindest eine äußere Wand 4', 4 mit zumindest einem Durchgangsloch 7 und einer inneren 24 bzw. äußeren 25 Oberfläche der Wand 4 aufweist.

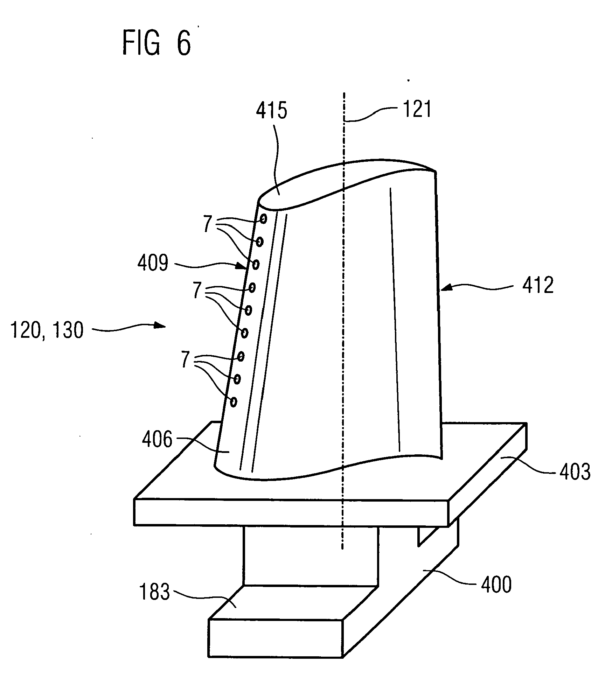

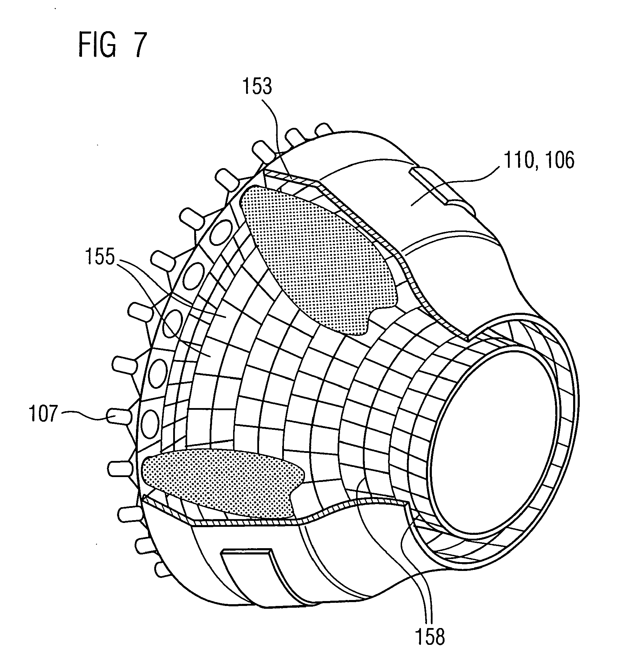

Das Bauteil 1 kann ein hohles Bauteil 1 (120, 130, Fig. 6) oder plattenförmig sein (z.B. Hitzeschildelement 155 bestehend aus einer Wand 4, Figur 7).

Durch das Durchgangsloch 7 strömt zumindest ein Mittel 11 (beispielsweise Säure, Säuregemisch, Base, Elektrolyt, ...) beispielsweise in Pfeilrichtung 10 von innen nach außen, um es an seiner Innenseite 8 nachzubearbeiten.
Im folgenden wird nur exemplarisch von einem Durchgangsloch 7 und einem Mittel 11 gesprochen, wobei sich die angegebenen Maßnahmen auf mehrere Durchgangslöcher 7 und mehrere Mittel analog übertragen lassen.

Soll der Durchmesser oder Querschnitt des Durchgangslochs 7 vergrößert werden oder sollen Oxidations- und/oder Korrosionsbestandteile sowie unerwünschte Ablagerungen einer Beschichtung auf der Innenseite 8 des Durchgangslochs 7 entfernt werden, so ist das Mittel 11 beispielsweise eine Säure (chemisches Mittel) oder ein Säuregemisch (mehrere Mittel) und/oder ein Fluid, das mechanisch abrasiv wirkende Teilchen enthält. Ebenso kann dieser Entfernungsprozess zweistufig gefahren werden, indem zuerst eine Säure und dann eine abrasive Behandlung oder umgekehrt erfolgt. Das Verfahren kann aber so betrieben werden, dass die Säure bereits abrasiv wirkende Teilchen enthält.

Da die Nachbearbeitung den Abtrag von Material an der Innenseite 8 des Durchgangslochs 7 beinhaltet, wird sich die Durchflussmenge pro Zeit t durch das Durchgangsloch 7 bei gleichem Druck erhöhen. Eine Kalibrierung erfolgt durch Durchflussmessungen an einem Durchgangsloch 7 mit gewünschter Geometrie.
Wenn durch die Nachbearbeitung Material auf die Innenseite 8 des Durchgangslochs 7 aufgetragen wird, so verjüngt sich der Querschnitt des Durchgangslochs 7 und die Durchflussmenge des Mittels 11 pro Zeit t verringert sich bei gleichem Druck. Ebenso wird auch hier anhand vorher erfolgter Kalibrierung festgelegt, wann die gewünschte Geometrie des Durchgangslochs 7 erreicht ist.
Für Durchflussmessungen der Kalibrierung können bspw. die verschiedenen Prinzipien der Druckdifferenz (Staurohr nach Bernoulli, Durchflussmessung nach dem Wirkdruckverfahren oder Venturirohr mit Membran), der Schwebekörperdurchflussmesser, der induktiven Durchflussmessungen oder der Ultraschallflowmeter verwendet werden.

Der Fortschritt der Nachbearbeitung des Durchgangslochs 7 wird erfindungsgemäß dadurch überwacht, dass der Durchfluss des Mittels 11 durch das Durchgangsloch 7 bei einem Druck deutlich kleiner 100bar, insbesondere kleiner 50bar oder kleiner 20bar bestimmt wird, so dass der zeitliche Fortschritt der Nachbearbeitung des Durchgangslochs 7 ermittelt werden kann. Erst diese niedrigen Drücke erlauben eine Sensor unterstützte Überwachung, da bei höheren Drücken der Sicherheitsaufwand zu hoch ist und die Sensoren geschützt werden müssten. Eine Druckmessung zur Überwachung kann ausgeschlossen werden.
Der Fortschritt der Nachbearbeitung kann kontinuierlich (online) oder diskontinuierlich überwacht werden.

Die Überwachung des Fortschritts der Nachbearbeitung erfolgt beispielsweise durch
I Verwendung eines Markers
II Messung von Konzentrationsänderungen
III Erzeugung und Messen von Temperaturunterschieden.

### I Marker

Figur 2 zeigt ausgehend von Figur 1 beispielhaft eine Messapparatur 13, die beispielsweise auf der äußeren Oberfläche 25 des Bauteils 1 angeordnet ist und durch die das Mittel 11, das das Durchgangsloch 7 durchströmt, ebenfalls strömt.
Bei mehreren Durchgangslöchern werden mehrere Messapparaturen 13 verwendet.
Dem Mittel 11, das das Durchgangsloch 7 durchströmt, kann beispielsweise zumindest ein, insbesondere ein Marker in einer bestimmten Konzentration zugesetzt werden, so dass je nachdem, ob das Durchgangsloch 7 sich vergrößert oder verkleinert, die absolute Menge des Markers, die aus dem Durchgangsloch 7 herausströmt, sich entsprechend vergrößert oder verkleinert, wobei dieser Wert durch eine Messapparatur 13 erfasst werden kann.

So können beispielsweise magnetische, insbesondere ferromagnetische Partikel als Marker dem Mittel 11, das das Durchgangsloch 7 durchströmt, beigemengt werden, die durch eine Messapparatur 13 beispielsweise induktiv oder mittels Ultraschall erfasst werden.

Bei der Entschichtung des Durchgangslochs 7 vergrößert sich der Querschnitt des Durchgangslochs 7, so dass entsprechend mehr ferromagnetische Partikel durch das Durchgangsloch 7 strömen können, so dass die Messapparatur ein stärkeres ferromagnetisches Signal erhält, das ein Maß für die Vergrößerung des Querschnitts des Durchgangslochs 7 darstellt.

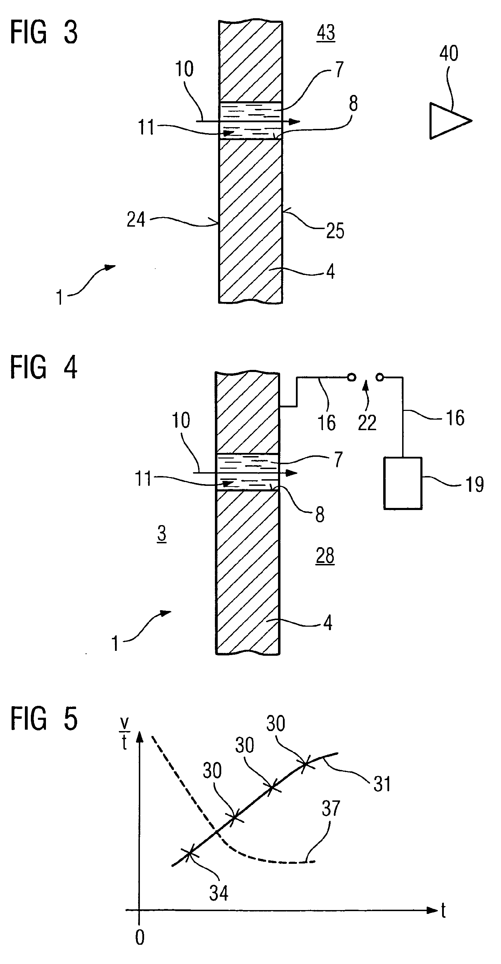

Figur 3 zeigt eine weitere beispielhafte Vorrichtung, um das erfindungsgemäße Verfahren durchzuführen.

Der Marker oder das Mittel 11 kann ein Material sein, das elektromagnetische Strahlen (beispielsweise sichtbares Licht, UV-Licht) absorbiert. Mittels einer Vorrichtung 40, die solche Strahlen aussendet und reflektierende Strahlen erfasst, wird ein Bild der Oberfläche 25 erfasst, das im Bereich des Durchgangslochs 7 dunkler erscheint und dem Querschnitt des Durchgangslochs 7 entspricht.
Die Größe des "dunklen" Bereiches verändert sich je nach Fortschritt der Bearbeitung.

### II Konzentrationsänderungen

Die Messapparatur 13 (bspw. Spule, Hallsonde, Ultraschallmessgerät, ..) gemäß Figur 2 kann beispielsweise anhand einer kapazitiven Veränderungen oder induktiven Veränderung des Mittels 11 ermitteln, ob sich die Durchflussmenge pro Zeit verändert.

Die Durchflussmenge pro Zeit ändert sich, weil der Durchmesser oder Querschnitt des Durchgangslochs 7 sich aufgrund der Nachbearbeitung in positiver oder negativer Weise verändert.

Wenn Material im Durchgangsloch 7 abgetragen wird, so gelangt neues Material von der Innenseite 8 in das Mittel 11 und strömt zur inneren Oberfläche 25 hin und kann induktiv oder kapazitiv bestimmt werden, weil es die Zusammensetzung des durchströmenden Mittels 11 verändert hat oder durch Spektralanalyse wird erfasst, dass neues Material (= abgetragenes Material) im Mittel 11 ist.

Wenn Material in dem Durchgangsloch 7 aufgetragen wird, so ändert sich auch die Zusammensetzung oder Konzentration des Elektrolyten (Konzentration des Beschichtungsmaterials), die wiederum bspw. kapazitiv oder induktiv erfasst wird.

Dabei muß die Menge des abgetragenen oder aufgetragenen Materials in Korrelation zum Durchmesser gesetzt werden.

### III Temperaturunterschiede

Das Mittel 11, das das Durchgangsloch 7 durchströmt, weist beispielsweise eine bestimmte Temperatur Tᵤ auf. Bei der Entschichtung oder Beschichtung der Innenfläche 8 des Durchgangslochs 7 findet beispielsweise eine exotherme Reaktion statt, sodass sich die Wand 4 im Bereich der Innenfläche 8 lokal erwärmt. Da der restliche Teil der Wand 4 in der Regel eine geringere Temperatur aufweist, kann der Bereich mit erhöhter Temperatur (mantelförmig um das Durchgangsloch 7 ausgebildet) mittels eines Thermographiesensors 40 erfasst werden.

Wenn beispielsweise die Entschichtung fortschreitet, vergrößert sich der Querschnitt des Durchgangslochs 7 und der Bereich mit der erhöhten Temperatur verschiebt sich entsprechend ebenfalls in radialer Richtung, so dass aus der Veränderung des Thermographiebilds, das von einem Thermographiesensor 40 aufgenommen wird, der vergrößerte Querschnitt des Durchgangslochs 7 erfasst werden kann.

Ebenso kann bei der Beschichtung oder Entschichtung eine endotherme Reaktion stattfinden, die zu einer Temperaturerniedrigung führt, die in ähnlicher Art und Weise von dem Thermographiesensor 40 erfasst wird.

Ein ähnlicher Aufbau gemäß Figur 3 kann verwendet werden, wenn die äußere Oberfläche 25 an ein gegenüber dem Mittel 11 wärmeres oder kälteres Medium 43 mit der Temperatur Tᵤ angrenzt, das das Durchgangsloch 7 vollständig umgibt und insbesondere dieselbe oder ähnliche Zusammensetzung aufweist wie das Mittel 11 mit der Temperatur T_{M}, das das Durchgangsloch 7 durchströmt. Dieser Temperaturunterschied kann mittels geeigneter Sensoren beispielsweise optisch erfasst werden.
Aufgrund des Temperaturunterschiedes (T_{M} - T_{U}) sind in den Bereichen mit den unterschiedlichen Temperaturen unterschiedliche optische Brechungsindizes gegeben, die auch von einem Sensor 40 zur Erfassung des Brechungsindexes erfasst werden und in ein Bild mit dem Querschnitt des Durchgangslochs 7 umgewandelt werden können.
Ebenso kann ein Thermographiesensor 40 verwendet werden, um die Größe des Durchgangslochs 7 zu erfassen.

Insbesondere wird ein kaltes Mediums 43 verwendet und ein warmes Mittel 11 durchströmt das Durchgangsloch 7.

Insbesondere wird die Wand 4 auf derselben Temperatur gehalten wie das Medium 43. Als Medium 43 wird beispielsweise Wasser bei Raumtemperatur genommen.

Figur 4 zeigt eine weitere Anordnung, um den Fortschritt der Nachbearbeitung eines Durchgangslochs 7 zu ermitteln.

Hier wird das Durchgangsloch 7 beispielsweise elektrochemisch bearbeitet. Dies kann beispielsweise eine elektrolytische Abtragung an den Innenflächen 8 des Durchgangslochs 7 oder eine elektrochemische Auftragung auf den Innenflächen 8 des Durchgangslochs 7 beinhalten.

Dabei bildet das Bauteil 1 eine Elektrode, die über elektrische Zuleitungen 16 und eine Spannungsquelle 22 mit einer weiteren Elektrode 19 verbunden ist.

Anhand des Stroms oder Spannungsabfalls kann anhand von Kalibrierungskurven der Durchfluss durch das Durchgangsloch 7 ermittelt werden. Bauteil 1 und Elektrode 19 sind in einem Elektrolyten 28 angeordnet, so dass sich der elektrische Stromkreis schließt.
Das Durchgangsloch 7 muss nicht notwendigerweise, kann aber, in demselben Elektrolytbad wie Bauteil 1 und Elektrode 19 vorhanden sein.
Der Elektrolyt für die Nachbearbeitung des Durchgangslochs 7 könnte beispielsweise auch über eine Rohrleitung separat zugeführt werden.

Figur 5 zeigt beispielhaft einen schematischen Verlauf der zeitlichen Änderung der Durchflussmenge durch ein Durchgangsloch.

Wenn bei der Nachbearbeitung des Durchgangslochs ein Abtrag von Material an den Innenflächen 8 des Durchgangslochs 7 erfolgt, so vergrößert sich der Querschnitt des Durchgangslochs und die Durchflussmenge steigt mit der Zeit an, wie es die Kurve 31 mit der durchgezogenen Linie darstellt.

Die Kurve 31 kann kontinuierlich oder diskontinuierlich durch Messen einzelner Werte 34 bestimmt werden.

In beiden Fällen kann die Messung online überwacht werden, d.h. die Werte werden an einen Computer übermittelt, der das Verfahren abbricht, wenn der vorgegebene Wert für die Durchflussmenge erreicht ist.

Wenn bei der Nachbearbeitung des Durchgangslochs ein Auftrag vom Material an den Innenflächen des Durchgangslochs erfolgt, so verjüngt sich der Querschnitt des Durchgangslochs und die Durchflussmenge nimmt mit der Zeit ab, wie es die gestrichelte Linie 37 in Figur 5 zeigt. Beide Kurven 31, 37 sind nur schematisch und können jeden anderen Verlauf (z.B. linear) aufweisen.

Figur 6 zeigt in perspektivischer Ansicht eine Schaufel 120, 130 als beispielhaftes Bauteil 1.

Die Schaufel 120 kann eine Laufschaufel 120 oder Leitschaufel 130 einer Strömungsmaschine sein, die sich entlang einer Längsachse 121 erstreckt. Die Strömungsmaschine kann eine Gasturbine eines Flugzeugs oder eines Kraftwerks zur Elektrizitätserzeugung, eine Dampfturbine oder ein Kompressor sein.

Die Schaufel 120, 130 weist entlang der Längsachse 121 aufeinander folgend einen Befestigungsbereich 400, eine daran angrenzende Schaufelplattform 403 sowie ein Schaufelblatt 406 auf.
Als Leitschaufel 130 kann die Schaufel an ihrer Schaufelspitze 415 eine weitere Plattform aufweisen (nicht dargestellt).

Im Befestigungsbereich 400 ist ein Schaufelfuß 183 gebildet, der zur Befestigung der Laufschaufeln 120, 130 an einer Welle oder einer Scheibe dient (nicht dargestellt).
Der Schaufelfuß 183 ist beispielsweise als Hammerkopf ausgestaltet. Andere Ausgestaltungen als Tannenbaum- oder Schwalbenschwanzfuß sind möglich.
Die Schaufel 120, 130 weist für ein Medium, das an dem Schaufelblatt 406 vorbeiströmt, eine Anströmkante 409 und eine Abströmkante 412 auf.

Bei herkömmlichen Schaufeln 120, 130 werden in allen Bereichen 400, 403, 406 der Schaufel 120, 130 beispielsweise massive metallische Werkstoffe verwendet.
Die Schaufel 120, 130 kann hierbei durch ein Gussverfahren, auch mittels gerichteter Erstarrung, durch ein Schmiedeverfahren, durch ein Fräsverfahren oder Kombinationen daraus gefertigt sein.

Werkstücke mit einkristalliner Struktur oder Strukturen werden als Bauteile für Maschinen eingesetzt, die im Betrieb hohen mechanischen, thermischen und/oder chemischen Belastungen ausgesetzt sind.
Die Fertigung von derartigen einkristallinen Werkstücken erfolgt z.B. durch gerichtetes Erstarren aus der Schmelze. Es handelt sich dabei um Gießverfahren, bei denen die flüssige metallische Legierung zur einkristallinen Struktur, d.h. zum einkristallinen Werkstück, oder gerichtet erstarrt.
Dabei werden dendritische Kristalle entlang dem Wärmefluss ausgerichtet und bilden entweder eine stängelkristalline Kornstruktur (kolumnar, d.h. Körner, die über die ganze Länge des Werkstückes verlaufen und hier, dem allgemeinen Sprachgebrauch nach, als gerichtet erstarrt bezeichnet werden) oder eine einkristalline Struktur, d.h. das ganze Werkstück besteht aus einem einzigen Kristall. In diesen Verfahren muss man den Übergang zur globulitischen (polykristallinen) Erstarrung meiden, da sich durch ungerichtetes Wachstum notwendigerweise transversale und longitudinale Korngrenzen ausbilden, welche die guten Eigenschaften des gerichtet erstarrten oder einkristallinen Bauteiles zunichte machen.

Ist allgemein von gerichtet erstarrten Gefügen die Rede, so sind damit sowohl Einkristalle gemeint, die keine Korngrenzen oder höchstens Kleinwinkelkorngrenzen aufweisen, als auch Stängelkristallstrukturen, die wohl in longitudinaler Richtung verlaufende Korngrenzen, aber keine transversalen Korngrenzen aufweisen. Bei diesen zweit genannten kristallinen Strukturen spricht man auch von gerichtet erstarrten Gefügen (directionally solidified structures).

Solche Verfahren sind aus der US-PS 6,024,792 und der EP 0 892 090 A1 bekannt.

Wiederaufarbeitung (Refurbishment) bedeutet, dass Bauteile 120, 130 nach ihrem Einsatz gegebenenfalls von Schutzschichten befreit werden müssen (z.B. durch Sandstrahlen). Danach erfolgt eine Entfernung der Korrosions- und/oder Oxidationsschichten bzw. -produkte. Gegebenenfalls werden auch noch Risse im Bauteil 120, 130 repariert. Danach erfolgt eine Wiederbeschichtung des Bauteils 120, 130 und ein erneuter Einsatz des Bauteils 120, 130.

Die Schaufel 120, 130 kann hohl oder massiv ausgeführt sein. Wenn die Schaufel 120, 130 gekühlt werden soll, ist sie hohl und weist ggf. noch Filmkühllöcher 7 auf, die mittels des erfindungsgemäßen Verfahrens nachbearbeitet werden können. Als Schutz gegen Korrosion weist die Schaufel 120, 130 beispielsweise entsprechende meistens metallische Beschichtungen auf und als Schutz gegen Wärme meistens noch eine keramische Beschichtung.

Die Figur 7 zeigt eine Brennkammer 110 einer Gasturbine.
Die Brennkammer 110 ist beispielsweise als so genannte Ringbrennkammer ausgestaltet, bei der eine Vielzahl von in Umfangsrichtung um die Turbinenwelle 103 herum angeordneten Brennern 102 in einen gemeinsamen Brennkammerraum münden. Dazu ist die Brennkammer 110 in ihrer Gesamtheit als ringförmige Struktur ausgestaltet, die um die Turbinenwelle 103 herum positioniert ist.

Zur Erzielung eines vergleichsweise hohen Wirkungsgrades ist die Brennkammer 110 für eine vergleichsweise hohe Temperatur des Arbeitsmediums M von etwa 1000°C bis 1600°C ausgelegt. Um auch bei diesen, für die Materialien ungünstigen Betriebsparametern eine vergleichsweise lange Betriebsdauer zu ermöglichen, ist die Brennkammerwand 153 auf ihrer dem Arbeitsmedium M zugewandten Seite mit einer aus Hitzeschildelementen 155 gebildeten Innenauskleidung versehen. Jedes Hitzeschildelement 155 ist arbeitsmediumsseitig mit einer besonders hitzebeständigen Schutzschicht ausgestattet oder aus hochtemperaturbeständigem Material gefertigt. Aufgrund der hohen Temperaturen im Inneren der Brennkammer 110 ist zudem für die Hitzeschildelemente 155 bzw. für deren Halteelemente ein Kühlsystem vorgesehen.

Ein Hitzeschildelement weist beispielsweise Löcher auf (nicht dargestellt), durch die ein Brennstoff oder Brennstoff/Gasgemisch strömt und die mittels des erfindungsgemäßen Verfahrens nachbearbeitet werden können.

Die Materialien der Brennkammerwand und deren Beschichtungen können ähnlich der Turbinenschaufeln sein.

Die Brennkammer 110 ist insbesondere für eine Detektion von Verlusten der Hitzeschildelemente 155 ausgelegt. Dazu sind zwischen der Brennkammerwand 153 und den Hitzeschildelementen 155 eine Anzahl von Temperatursensoren 158 positioniert.

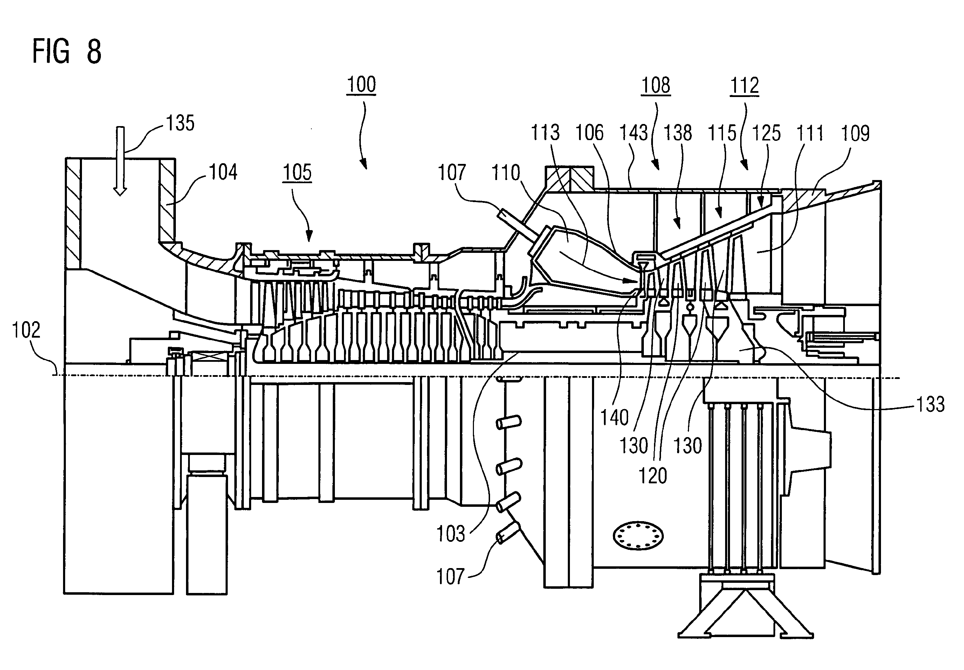

Die Figur 8 zeigt beispielhaft eine Gasturbine 100 in einem Längsteilschnitt.
Die Gasturbine 100 weist im Inneren einen um eine Rotationsachse 102 drehgelagerten Rotor 103 auf, der auch als Turbinenläufer bezeichnet wird.
Entlang des Rotors 103 folgen aufeinander ein Ansauggehäuse 104, ein Verdichter 105, eine beispielsweise torusartige Brennkammer 110, insbesondere Ringbrennkammer 106, mit mehreren koaxial angeordneten Brennern 107, eine Turbine 108 und das Abgasgehäuse 109.

Die Ringbrennkammer 106 kommuniziert mit einem beispielsweise ringförmigen Heißgaskanal 111. Dort bilden beispielsweise vier hintereinander geschaltete Turbinenstufen 112 die Turbine 108.
Jede Turbinenstufe 112 ist beispielsweise aus zwei Schaufelringen gebildet. In Strömungsrichtung eines Arbeitsmediums 113 gesehen folgt im Heißgaskanal 111 einer Leitschaufelreihe 115 eine aus Laufschaufeln 120 gebildete Reihe 125.

Die Leitschaufeln 130 sind dabei an einem Innengehäuse 138 eines Stators 143 befestigt, wohingegen die Laufschaufeln 120 einer Reihe 125 beispielsweise mittels einer Turbinenscheibe 133 am Rotor 103 angebracht sind.
An dem Rotor 103 angekoppelt ist ein Generator oder eine Arbeitsmaschine (nicht dargestellt).

Während des Betriebes der Gasturbine 100 wird vom Verdichter 105 durch das Ansauggehäuse 104 Luft 135 angesaugt und verdichtet. Die am turbinenseitigen Ende des Verdichters 105 bereitgestellte verdichtete Luft wird zu den Brennern 107 geführt und dort mit einem Brennmittel vermischt. Das Gemisch wird dann unter Bildung des Arbeitsmediums 113 in der Brennkammer 110 verbrannt. Von dort aus strömt das Arbeitsmedium 113 entlang des Heißgaskanals 111 vorbei an den Leitschaufeln 130 und den Laufschaufeln 120. An den Laufschaufeln 120 entspannt sich das Arbeitsmedium 113 impulsübertragend, so dass die Laufschaufeln 120 den Rotor 103 antreiben und dieser die an ihn angekoppelte Arbeitsmaschine.

Die dem heißen Arbeitsmedium 113 ausgesetzten Bauteile unterliegen während des Betriebes der Gasturbine 100 thermischen Belastungen. Die Leitschaufeln 130 und Laufschaufeln 120 der in Strömungsrichtung des Arbeitsmediums 113 gesehen ersten Turbinenstufe 112 werden neben den die Ringbrennkammer 106 auskleidenden Hitzeschildsteinen am meisten thermisch belastet.
Um den dort herrschenden Temperaturen standzuhalten, können diese mittels eines Kühlmittels gekühlt werden.
Ebenso können Substrate der Bauteile eine gerichtete Struktur aufweisen, d.h. sie sind einkristallin (SX-Struktur) oder weisen nur längsgerichtete Körner auf (DS-Struktur).
Als Material für die Bauteile, insbesondere für die Turbinenschaufel 120, 130 und Bauteile der Brennkammer 110 werden beispielsweise eisen-, nickel- oder kobaltbasierte Superlegierungen verwendet.
Solche Superlegierungen sind beispielsweise aus der EP 1 204 776, EP 1 306 454, EP 1 319 729, WO 99/67435 oder WO 00/44949 bekannt; diese Schriften sind Teil der Offenbarung.

Ebenso können die Schaufeln 120, 130 Beschichtungen gegen Korrosion (MCrAlX; M ist zumindest ein Element der Gruppe Eisen (Fe), Kobalt (Co), Nickel (Ni), X ist ein Aktivelement und steht für Yttrium (Y) und/oder Silizium und/oder zumindest ein Element der Seltenen Erden) und Wärme durch eine Wärmedämmschicht aufweisen.
Die Wärmedämmschicht besteht beispielsweise ZrO₂, Y₂O₄-ZrO₂, d.h. sie ist nicht, teilweise oder vollständig stabilisiert durch Yttriumoxid und/oder Kalziumoxid und/oder Magnesiumoxid.
Durch geeignete Beschichtungsverfahren wie z.B. Elektronenstrahlverdampfen (EB-PVD) werden stängelförmige Körner in der Wärmedämmschicht erzeugt.

Die Leitschaufel 130 weist einen dem Innengehäuse 138 der Turbine 108 zugewandten Leitschaufelfuß (hier nicht dargestellt) und einen dem Leitschaufelfuß gegenüberliegenden Leitschaufelkopf auf. Der Leitschaufelkopf ist dem Rotor 103 zugewandt und an einem Befestigungsring 140 des Stators 143 festgelegt.

## Patentansprüche

1. Verfahren zur Nachbearbeitung,
insbesondere zur elektrolytischen Nachbearbeitung, zumindest eines Durchgangslochs (7) mittels zumindest eines Mittels (11),
das durch das zumindest eine Durchgangsloch (7) strömt und dieses bearbeitet,
wobei der zeitlich abhängige Durchfluss des Mittels (11) durch das zumindest eine Durchgangsloch (7) gemessen wird,
anhand dessen der Fortschritt der Nachbearbeitung des zumindest einen Durchgangslochs (7) ermittelt wird,
**dadurch gekennzeichnet, dass**
das Mittel (11) mit einem Druck deutlich kleiner 100bar, insbesondere kleiner 50bar oder kleiner 20bar durch das zumindest eine Durchgangsloch (7) strömt.

2. Verfahren nach Anspruch 1,
**dadurch gekennzeichnet, dass**
dem Mittel (11),
das das zumindest eine Durchgangsloch (7) durchströmt, zumindest ein Marker beigemengt wird,
dessen Konzentration ein Maß für den Durchfluss des Mittels (11) durch das zumindest eine Durchgangsloch (7) darstellt.

3. Verfahren nach Anspruch 1 oder 2,
**dadurch gekennzeichnet, dass**
sich aufgrund der Bearbeitung des Durchgangslochs (7) Konzentrationsänderungen des Mittels (11) ergeben, so dass daraus der Durchfluss ermittelt wird.

4. Verfahren nach Anspruch 1, 2 oder 3,
**dadurch gekennzeichnet,**
**dass** beim Durchströmen des Mittels (11) im Durchgangsloch (7) eine exo- oder endotherme Reaktion an der Innenseite (8) des Durchgangslochs (7) stattfindet und
**dass** der **dadurch** bedingte Wärmeeintrag in das Mittel (11) oder in das Bauteil (1) oder der entsprechende Wärmeentzug mittels eines geeigneten Sensors (40) erfasst wird und mit dem Durchfluss des Mittels (11) korreliert wird.

5. Verfahren nach Anspruch 2,
**dadurch gekennzeichnet, dass**
als Marker magnetische oder elektromagnetische Strahlung absorbierende Teilchen verwendet werden.

6. Verfahren nach Anspruch 1, 2, 3 oder 4,
**dadurch gekennzeichnet,**
**dass** das Mittel (11),
das das Durchgangsloch (7) durchströmt,
eine Temperatur (T_{M}) aufweist, und
**dass** das Mittel (11) beim Austreten aus der Oberfläche (25) um das Durchgangsloch (7) in ein Umgebungsmedium (43) strömt,
das (43) eine Temperatur (T_{U}) aufweist,
die von der Temperatur (T_{M}) abweicht,
wobei diese Abweichungen in der Temperatur,
insbesondere durch eine Vorrichtung (40) zur Erfassung des optischen Brechungsindexes,
zur Erzeugung eines für das Durchgangsloch (7) repräsentativen Abbildes geometrisch erfasst wird.

7. Verfahren nach Anspruch 1, 3, 4 oder 6,
**dadurch gekennzeichnet, dass**
die Nachbearbeitung des Durchgangslochs (7) mittels Durchströmen zumindest eines chemischen Mittels (11), insbesondere einer oder mehrerer Säuren, erfolgt, insbesondere um eine Entschichtung oder eine Vergrößerung des Durchgangslochs (7) an der Innenseite (8) zu erreichen.

8. Verfahren nach Anspruch 1,
**dadurch gekennzeichnet, dass**
durch die Nachbearbeitung des Durchgangslochs (7) ein Auftrag von Material an der Innenseite (8) des zumindest einen Durchgangslochs (7) erfolgt.

9. Verfahren nach Anspruch 1,
**dadurch gekennzeichnet, dass**
durch die Nachbearbeitung des Durchgangslochs (7) eine Abtragung von Material an der Innenseite (8) des Durchgangslochs (7) erfolgt.

10. Verfahren nach Anspruch 1, 2, 4, 6, 7 oder 9,
**dadurch gekennzeichnet, dass**
die Nachbearbeitung des Durchgangslochs (7) zumindest zu einem Teil durch mechanisch abrasive Mittel (11) erfolgt, um eine Entschichtung oder eine Vergrößerung des Durchgangslochs (7) an der Innenseite (8) zu erreichen.

11. Verfahren nach Anspruch 1, 2, 3, 4, 6, 7 oder 8,
**dadurch gekennzeichnet, dass**
die Nachbearbeitung des Durchgangslochs (7) durch einen Elektrolyten erfolgt,
um eine Beschichtung des Durchgangslochs (7) an der Innenseite (8) zu erreichen.

12. Verfahren nach einem oder mehreren der vorherigen Ansprüche,
**dadurch gekennzeichnet, dass**
der Durchfluss induktiv bestimmt wird.

13. Verfahren nach einem oder mehreren der vorherigen Ansprüche,
**dadurch gekennzeichnet, dass**
der Durchfluss mittels Ultraschallmessung bestimmt wird.

14. Verfahren nach Anspruch 1, 8 oder 9,
**dadurch gekennzeichnet, dass**
die Nachbearbeitung an einem neu hergestellten Bauteil (1) erfolgt.

15. Verfahren nach Anspruch 1, 8 oder 9,
**dadurch gekennzeichnet, dass**
die Nachbearbeitung an einem wieder aufzuarbeitenden Bauteil (1) erfolgt.
